# EUROPEAN PATENT APPLICATION

(11) **EP 4 599 670 A1**
(43) Date of publication of application: **13.08.2025**
(21) Application number: 24833792.5
(22) Date of filing: 19.06.2024
(51) Int. Cl.: A01K 1/01, A01K 29/00

(54) **FULL-AUTOMATIC CAT LITTER BOX**

(30) Priority: 28.12.2023 CN 202323604577 U
(71) Applicant: PETKIT NETWORK TECHNOLOGY (SHANGHAI) CO., LTD., Shanghai 201100 (CN)
(72) Inventor: LI, Yun, Shanghai 201100 (CN); JIANG, Lihua, Shanghai 201100 (CN); MA, Xiaoqing, Shanghai 201100 (CN); ZHANG, Junchao, Shanghai 201100 (CN)
(74) Representative: Cabinet Beaumont
(86) International application number: PCT/CN2024/100048
(87) International publication number: WO 2025/138641

(57) **Abstract**

Provided is a full-automatic litter box. The full-automatic litter box includes a housing base, a toilet compartment, and an imaging apparatus. The toilet compartment is disposed on the housing base, and the imaging apparatus includes a support arm and a camera assembly. The support arm is disposed on the housing base. The camera assembly is rotatably disposed on the support arm and located beside the inlet-outlet port of the toilet compartment. The camera assembly is rotatable and configured to shoot an internal region of the toilet compartment and a region within a preset external range of the toilet compartment.

## Description

This application claims priority to Chinese Patent Application No. 202323604577.7 filed with the China National Intellectual Property Administration (CNIPA) on Dec. 28, 2023, the disclosure of which is incorporated herein by reference in its entirety.

### TECHNICAL FIELD

The present application relates to the technical field of pet supplies, for example, a full-automatic litter box.

### BACKGROUND

Mainly used as toilet supplies for pet cats, litter boxes are convenient for cleaning the feces and urine of the pet cats. Therefore, the litter boxes are a must for users who like to keep pet cats.

In the related art, the litter boxes require to be cleaned regularly by people, which is not smart enough, so automatic litter boxes have emerged. However, most of the automatic litter boxes in the related art are not provided with cameras. Although a few automatic litter boxes are provided with cameras, the cameras have a fixed viewing angle and a limited observation range, which cannot satisfy the requirements of real-time observation of the interior and exterior of the litter boxes.

### SUMMARY

The present application provides a full-automatic litter box so that a user can observe the internal and external surroundings of the litter box in real time and understand the living conditions of a pet, thereby providing a better user experience.

An embodiment of the present application provides a full-automatic litter box. The full-automatic litter box includes a housing base; a toilet compartment disposed on the housing base; an imaging apparatus including a support arm and a camera assembly, where the support arm is disposed on the housing base, the camera assembly is disposed on the support arm with an adjustable rotation angle and located beside an inlet-outlet port of the toilet compartment, and the camera assembly is rotatable and configured to shoot an internal region of the toilet compartment and a region within a preset external range of the toilet compartment.

### BRIEF DESCRIPTION OF DRAWINGS

FIG. 1 is a side view of a full-automatic litter box according to an embodiment of the present application.
FIG. 2 is a front view of a full-automatic litter box according to an embodiment of the present application.
FIG. 3 is a top view of a full-automatic litter box according to an embodiment of the present application.
FIG. 4 is a first view illustrating the structure of an imaging apparatus according to an embodiment of the present application.
FIG. 5 is a second view illustrating the structure of an imaging apparatus according to an embodiment of the present application.
FIG. 6 is a view illustrating the internal structure of a camera assembly according to an embodiment of the present application.
FIG. 7 is a first exploded view of an imaging apparatus according to an embodiment of the present application.
FIG. 8 is a second exploded view of an imaging apparatus according to an embodiment of the present application.
FIG. 9 is a view when an imaging apparatus shoots the interior of a toilet compartment according to an embodiment of the present application.
FIG. 10 is a view of a shooting range when a camera assembly of an imaging apparatus is rotated outward by 90° according to an embodiment of the present application.
FIG. 11 is a view of a shooting range when a camera assembly of an imaging apparatus is rotated outward by 180° according to an embodiment of the present application.

### Reference list

- 1: housing base
- 2: toilet compartment
- 3: imaging apparatus
- 21: inlet-outlet port
- 31: support arm
- 32: camera assembly
- 311: first support portion
- 312: second support portion
- 313: first connection tab
- 314: second connection tab
- 315: rolling element
- 316: indicator lamp
- 317: microphone
- 318: display component
- 319: control button
- 3131: securing shaft
- 3132: first rotation groove
- 3141: second rotation groove
- 3142: first stop platform
- 3143: second stop platform
- 321: installation seat
- 322: camera
- 323: drive member

- 324: first gear
- 325: second gear
- 326: lighting component
- 3211: first rotation ring
- 3212: second rotation ring
- 3213: rotation limiting protrusion
- 3214: insertion hole
- 3215: friction protrusion
- 3251: connection portion

### DETAILED DESCRIPTION

In the description of the present application, it is to be noted that orientations or position relations indicated by terms such as "center", "upper", "lower", "left", "right", "vertical", "horizontal", "in" and "out" are based on the drawings. These orientations or position relations are intended only to facilitate and simplify the description of the present application and not to indicate or imply that an apparatus or element referred to must have such particular orientations or must be configured or operated in such particular orientations. Thus, these orientations or position relations are not to be construed as limiting the present application. Additionally, terms such as "first" and "second" are used only for the purpose of description and are not to be construed as indicating or implying relative importance. Terms "first position" and "second position" are two different positions.

In the description of the present application, it is to be noted that terms such as "installed", "joined", and "connected" are to be understood in a broad sense unless otherwise expressly specified and limited. For example, the term "connected" may refer to "securely connected" or "detachably connected"; may refer to "mechanically connected" or "electrically connected"; or may refer to "connected directly", "connected indirectly through an intermediary", or "connected in two components". For those of ordinary skill in the art, specific meanings of the preceding terms in the present application may be understood based on specific situations.

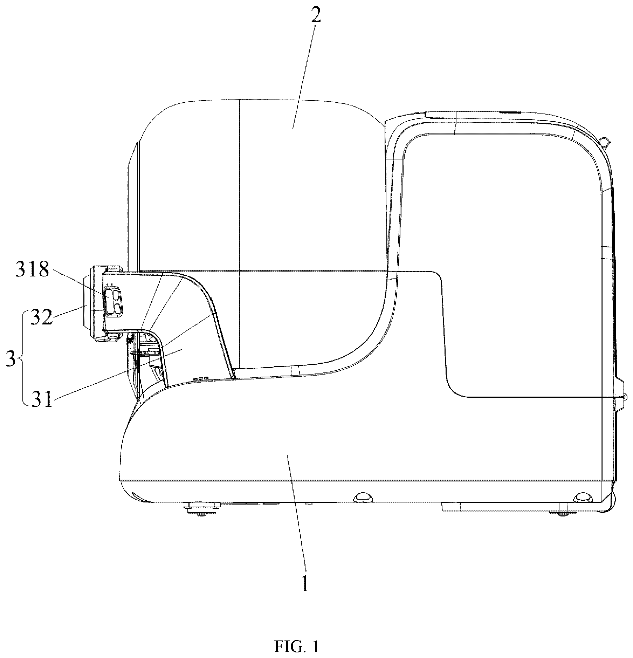

As shown in FIGS. 1 to 3, this embodiment provides a full-automatic litter box so that a user can observe the internal and external surroundings of the litter box in real time and understand the living conditions of a pet, thereby providing a better user experience. The full-automatic litter box includes a housing base 1, a toilet compartment 2, and an imaging apparatus 3.

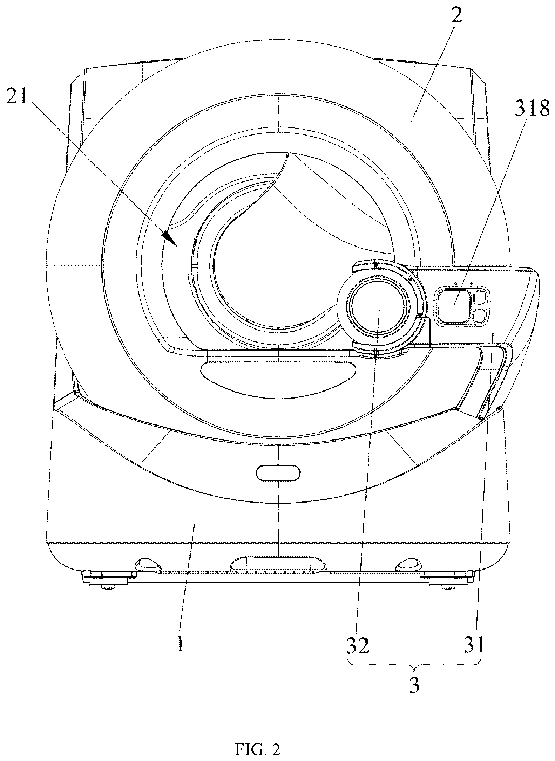

Referring to FIGS. 1 and 2, the toilet compartment 2 is disposed on the housing base 1, and the imaging apparatus 3 includes a support arm 31 and a camera assembly 32. The support arm 31 is disposed on the housing base 1. The camera assembly 32 is rotatably disposed on the support arm 31 and located beside the inlet-outlet port 21 of the toilet compartment 2. The camera assembly 32 can rotate and may shoot an internal region of the toilet compartment 2 and a region within a preset external range of the toilet compartment 2.

The full-automatic litter box provided in this embodiment allows the user to adjust the shooting range by adjusting the rotation angle of the camera assembly 32 relative to the support arm 31. When the camera assembly 32 rotates to shoot the internal region of the toilet compartment 2, the user may check the toilet situation of a pet cat at any time and observe the remaining amount of cat litter within the toilet compartment 2 and the operation of the toilet compartment 2. When the camera assembly 32 shoots an external region of the toilet compartment 2, the user may check the surroundings around the toilet compartment 2 at any time to understand the living conditions of the pet cat. Since the camera assembly 32 is located beside the inlet-outlet port 21 of the toilet compartment 2, the camera assembly 32 does not interfere with the pet cat entering and exiting the toilet compartment 2. In other words, the full-automatic litter box can allow the user to observe the internal and external surroundings of the litter box in real time and understand the living conditions of the pet, thereby providing the better user experience.

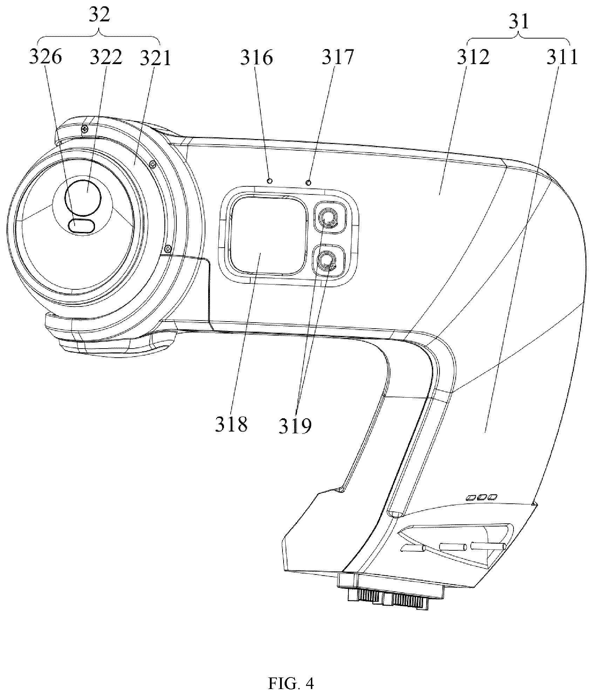

In an embodiment, referring to FIG. 4, the camera assembly 32 includes an installation seat 321 and a camera 322 disposed on the installation seat 321. The installation seat 321 is rotatably connected to the support arm 31, and the camera 322 is configured to shoot a video. The installation seat 321 provides an installation base for the camera 322 to drive the camera 322 to rotate relative to the support arm 31 to adjust the shooting angle so that the camera 322 can shoot an internal scene of the toilet compartment 2 and an external scene of the toilet compartment 2.

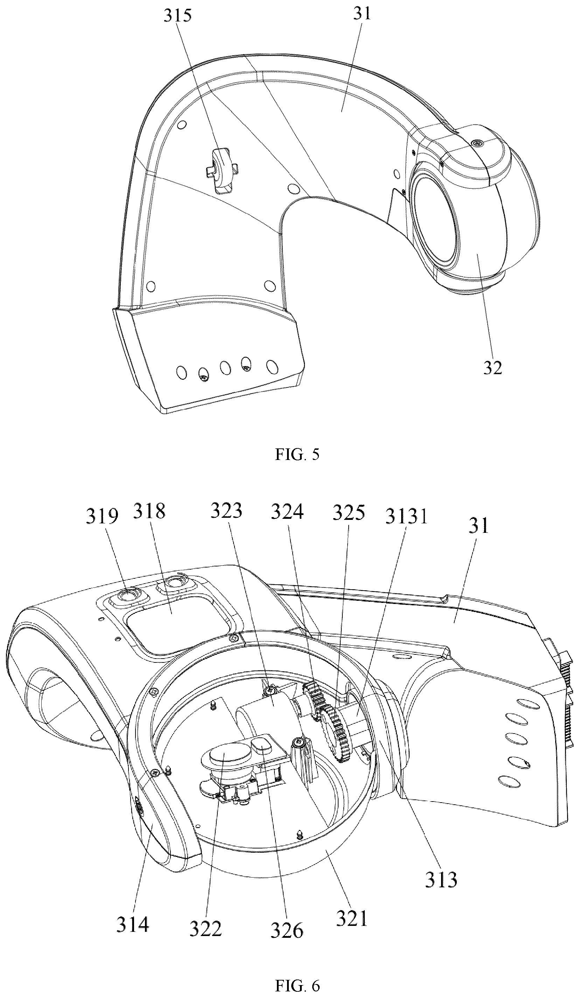

In an embodiment, referring to FIGS. 6 to 8, a first connection tab 313 and a second connection tab 314 are spaced apart and disposed on the support arm 31, a rotation space is defined between the first connection tab 313 and the second connection tab 314, and the installation seat 321 is located within the rotation space and rotatably connected to the first connection tab 313 and the second connection tab 314. The installation seat 321 is arranged between the first connection tab 313 and the second connection tab 314 so that the rotation stability of the installation seat 321 can be ensured while the first connection tab 313 and the second connection tab 314 can protect the installation seat 321 to a certain extent and prevent the camera 322 from being damaged by collision.

In this embodiment, the installation seat 321 is drum-shaped, and the first connection tab 313 and the second connection tab 314 are bent in an arc shape to form an arc rotation space between the first connection tab 313 and the second connection tab 314 to be adapted to the shape of the installation seat 321 and ensure the smooth rotation of the installation seat 321.

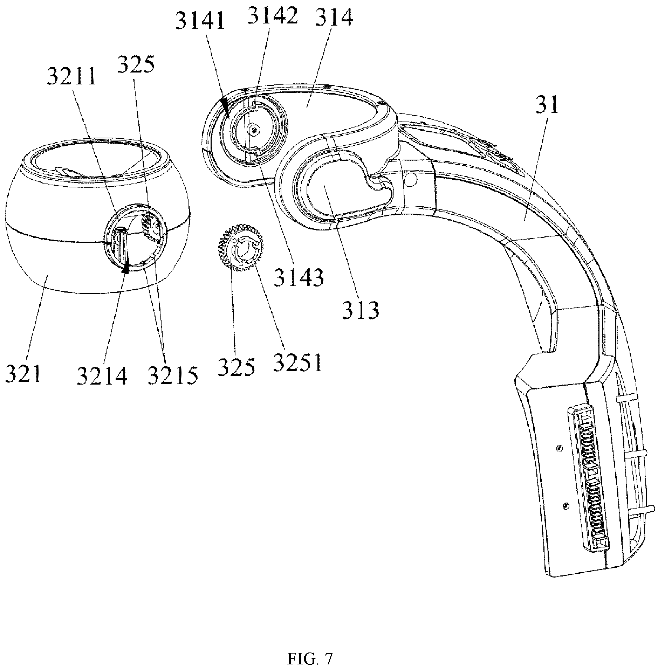

In an embodiment, referring to FIGS. 6 and 7, the installation seat 321 has an accommodation cavity, and the camera assembly 32 further includes a drive member 323, a first gear 324, and a second gear 325 that are located within the accommodation cavity. The drive member 323 is secured within the accommodation cavity. The first gear 324 is securely connected to an output end of the drive member 323, and the first gear 324 is drivingly engaged with the second gear 325. The first connection tab 313 or the second connection tab 314 is convexly provided with a securing shaft 3131 The securing shaft 3131 extends into the accommodation cavity and is securely connected to the second gear 325. Since the drive member 323 is securely connected to the installation seat 321, and the second gear 325 is securely connected to the securing shaft 3131, that is, the second gear 325 is stationary, when the drive member 323 drives the first gear 324 to rotate, the first gear 324, under the engagement action of the second gear 325, enables the drive member 323 to drive the installation seat 321 to rotate as a whole around the axis of the securing shaft 3131 so that the installation seat 321 can rotate relative to the first connection tab 313 and the second connection tab 314, thereby adjusting the shooting angle of the camera 322. The gear transmission is stable in rotation and easy to control the rotation angle.

In an embodiment, the drive member 323 is a rotating motor, a securing bracket is disposed within the accommodation cavity, and the housing of the rotating motor is securely connected to the securing bracket through fasteners such as bolts.

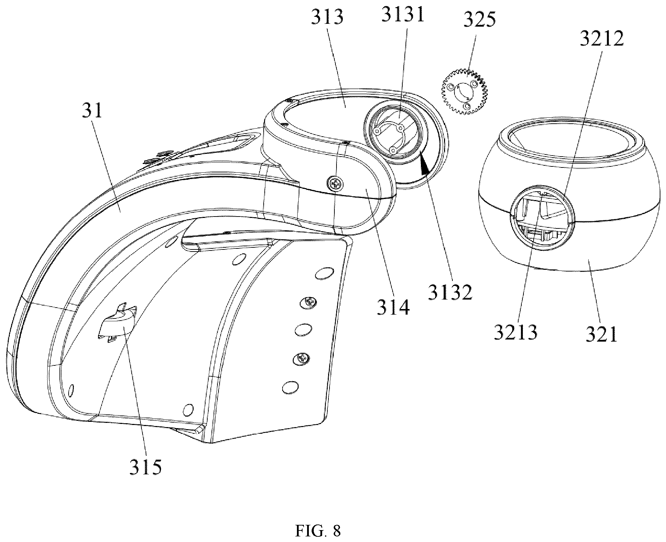

In an embodiment, the second gear 325 is secured to the securing shaft 3131 through bolts to ensure a reliable connection. As shown in FIG. 7, the second gear 325 is convexly provided with connection portions 3251. As shown in FIG. 8, the securing shaft 3131 is disposed on the first connection tab 313 and is a hollow shaft, and the connection portions 3251 are inserted into a cavity of the securing shaft 3131 to further improve the connection stability between the second gear 325 and the securing shaft 3131.

In this embodiment, as shown in FIGS. 6 to 8, the installation seat 321 includes a first half housing and a second half housing that are interlocked, and the accommodation cavity is formed between the first half housing and the second half housing. Referring to the orientations in FIG. 7, the first half housing is on the top, and the second half housing is at the bottom. The outer top surface of the first half housing is concave inward, and the camera 322 is located at the concave position to protect the camera 322 and prevent the camera 322 from being damaged.

In an embodiment, referring to FIGS. 7 and 8, the installation seat 321 is convexly provided with a first rotation ring 3211 and a second rotation ring 3212, the first connection tab 313 is formed with a first rotation groove 3132, and the second connection tab 314 is formed with a second rotation groove 3141. The first rotation ring 3211 is snapped in the first rotation groove 3132 and rotatably fitted with the first rotation groove 3132, and the second rotation ring 3212 is snapped in the second rotation groove 3141 and rotatably fitted with the second rotation groove 3141. In this embodiment, the first rotation ring 3211 and the second rotation ring 3212 are coaxially disposed, and the first rotation groove 3132 and the second rotation groove 3141 are annular grooves; the fit between the first rotation ring 3211 and the first rotation groove 3132 and the fit between the second rotation ring 3212 and the second rotation groove 3141 can limit the position of the rotation axis of the installation seat 321 to ensure that the installation seat 321 rotates more stably relative to the first connection tab 313 and the second connection tab 314.

In an embodiment, referring to FIG. 8, the first rotation groove 3132 is around the periphery of the securing shaft 3131; referring to FIG. 7, the installation seat 321 is provided with an insertion hole 3214 within the first rotation ring 3211, the insertion hole 3214 communicates with the accommodation cavity, and the securing shaft 3131 extends into the accommodation cavity through the insertion hole 3214 to be connected to the second gear 325 within the accommodation cavity. The hole diameter of the insertion hole 3214 is larger than the diameter of the securing shaft 3131 to prevent the securing shaft 3131 from interfering with the installation seat 321 and ensure the smooth rotation of the installation seat 321.

In an embodiment, referring to FIG. 7, multiple friction protrusions 3215 are spaced apart and disposed on the inner side of the first rotation ring 3211 in the circumferential direction. The multiple friction protrusions 3215 can frictionally contact the inner wall of the first rotation groove 3132, thereby improving the rotation stability of the installation seat 321.

In an embodiment, referring to FIG. 7, the second connection tab 314 is provided with a first stop platform 3142 and a second stop platform 3143 that are spaced apart and disposed within the second rotation groove 3141 in the circumferential direction; referring to FIG. 8, a rotation limiting protrusion 3213 is disposed within the second rotation ring 3212 and can abut against or be separated from the first stop platform 3142 or the second stop platform 3143. The fit between the rotation limiting protrusion 3213 and the first stop platform 3142 and between the rotation limiting protrusion 3213 and the second stop platform 3143 can limit the rotation angle of the second rotation ring 3212 within the second rotation groove 3141, thereby limiting the rotation angle of the installation seat 321 and preventing rotation overtravel.

The included angle between the first stop platform 3142 and the second stop platform 3143 in the circumferential direction is the rotation angle range of the installation seat 321. Exemplarily, the included angle between the first stop platform 3142 and the second stop platform 3143 is 180°, and the installation seat 321 may drive the camera 322 to rotate within the range from 0° to 180°.

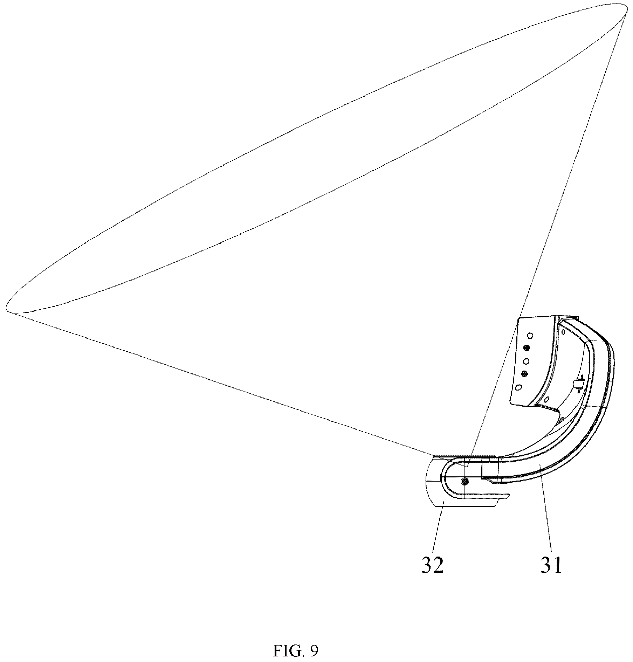

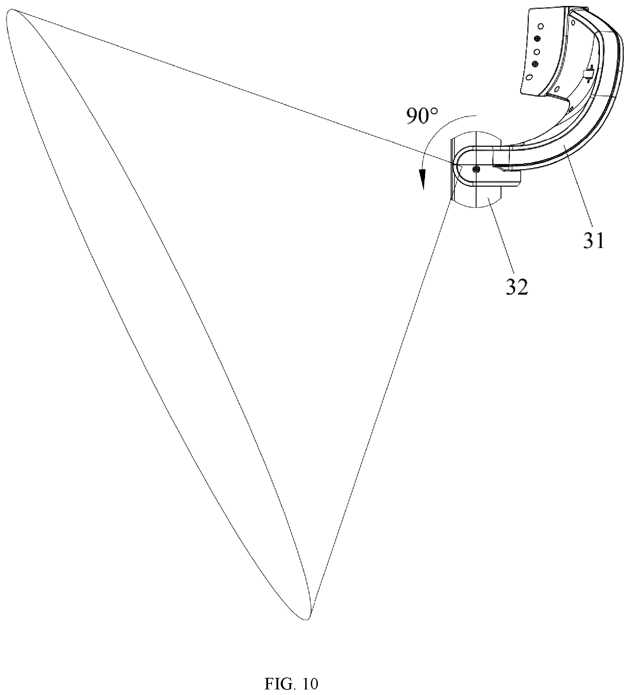

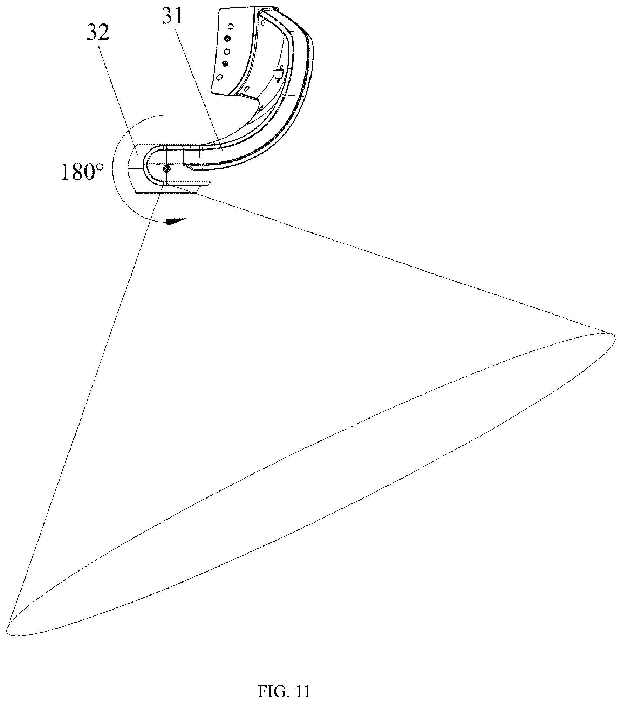

As shown in FIG. 9, in this case, the camera 322 is facing the interior of the toilet compartment 2, and the shooting range of the camera 322 is the range circled by a conical line in FIG. 9. As shown in FIG. 10, in this case, the installation seat 321 is rotated by 90° counterclockwise relative to the state in FIG. 9, and the shooting range of the camera 322 is the range circled by a conical line in FIG. 10. As shown in FIG. 11, in this case, the camera 322 is rotated by 180° counterclockwise relative to the state in FIG. 9, the shooting range of the camera 322 is the range circled by a conical line in FIG. 11, and the surroundings around the toilet compartment 2 may be captured.

In an embodiment, the toilet compartment 2 is rotatably disposed on the housing base 1; referring to FIGS. 5 and 8, one side of the support arm 31 facing the toilet compartment 2 is provided with a rotatable rolling element 315, and the support arm 31 is in rolling fit with the outer wall of the toilet compartment 2 through the rolling element 315. The arrangement of the rolling element 315 can prevent the support arm 31 from interfering with the rotation of the toilet compartment 2, thereby ensuring the normal working of the full-automatic litter box.

In an embodiment, the support arm 31 is concavely formed with an installation groove, and the rolling element 315 is a roller rotatably disposed within the installation groove.In an embodiment, referring to FIG. 4, the support arm 31 includes a first support portion 311 and a second support portion 312 that are connected and disposed at an included angle from each other, the first support portion 311 is detachably connected to the housing base 1, and the second support portion 312 is bent and extends relative to the first support portion 311 toward the axial direction of the toilet compartment 2 so that the installation seat 321 and the camera 322 can be located beside the inlet-outlet port 21 of the toilet compartment 2. The first support portion 311 is detachably connected to the housing base 1 to facilitate assembly and later maintenance. Exemplarily, the housing base 1 is formed with a slot, and an end portion of the first support portion 311 is provided with an insertion portion that may be inserted into the slot.

In this embodiment, referring to FIGS. 4 and 7, the first connection tab 313 and the second connection tab 314 are spaced apart and disposed at one end of the second support portion 312 facing away from the first support portion 311.

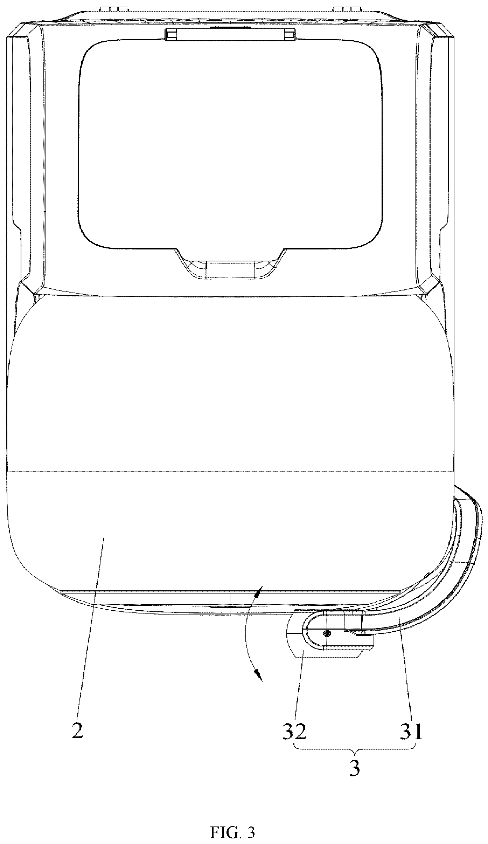

In an embodiment, the first support portion 311 and the second support portion 312 have a certain curvature so that the first support portion 311 and the second support portion 312 can be adapted to the curvature of the outer wall of the toilet compartment 2, and the support arm 31 can roughly fit the periphery of the toilet compartment 2 (as shown in FIG. 3), thereby improving the overall aesthetics of the full-automatic litter box.

In an embodiment, referring to FIGS. 4 and 6, the camera assembly 32 further includes a lighting component 326 disposed on the installation seat 321. The lighting component 326 provides fill light for the camera 322 to ensure that the camera 322 can also shoot clear video images even in poor light or at night, thereby ensuring the monitoring effect. Exemplarily, the lighting component 326 may include a fill-light LED lamp or an infrared lamp.

In an embodiment, referring to FIG. 4, the support arm 31 is provided with an indicator lamp 316 and a microphone 317. The indicator lamp 316 indicates the working state of the camera 322, and the microphone 317 collects audio. The indicator lamp 316 may be used for determining whether the camera 322 is working normally so that the user can timely grasp the working state of the camera 322. The microphone 317 collects the sounds around the litter box so that the user can grasp the condition of the pet cat more realistically. Additionally, the microphone 317 can perform voice interaction with the pet cat, making the functions of the litter box more comprehensive.

In this embodiment, the installation seat 321 is further provided with a control circuit board within the accommodation cavity, and the camera 322, the drive member 323, the indicator lamp 316, the microphone 317 and others are electrically connected to the control circuit board separately. The control circuit board may be remotely and communicatively connected to the user's mobile phone and other mobile devices. The user may send corresponding instructions to the control circuit board through the mobile phone to control the opening and closing of the drive member 323 so that the rotation angle of the installation seat 321 can be adjusted, thereby adjusting the shooting range of the camera 322. The user may adjust the shooting angle in real time as required. Moreover, the video images collected by the camera 322 may be remotely transmitted to the user's mobile phone so that the user can check the living conditions of the pet cat in real time.

In an embodiment, referring to FIGS. 4 and 6, the support arm 31 is provided with a display component 318 and control buttons 319. The display component 318 is configured to display the function menu of the full-automatic litter box, and the control buttons 319 are configured to adjust and execute any function in the function menu. The current working state of the full-automatic litter box may be intuitively learned through the display component 318, and the functions executed by the full-automatic litter box may be switched through the control buttons 319, which is more convenient in operation. Exemplarily, the display component 318 is a display screen; the function menu includes function options such as litter cleaning, packing, and shutting down; the control buttons 319 include a power on-off button and an adjustment button. The power on-off button may be used for turning on or off the power of the full-automatic litter box, and the adjustment button may be used for adjusting the function options.

## Claims

1. A full-automatic litter box, comprising:
a housing base (1);
a toilet compartment (2) disposed on the housing base (1); and
an imaging apparatus (3) comprising a support arm (31) and a camera assembly (32), wherein the support arm (31) is disposed on the housing base (1), the camera assembly (32) is disposed on the support arm (31) with an adjustable rotation angle and located beside an inlet-outlet port (21) of the toilet compartment (2), and the camera assembly (32) is rotatable and configured to shoot an internal region of the toilet compartment (2) and a region within a preset external range of the toilet compartment (2).

2. The full-automatic litter box of claim 1, wherein the camera assembly (32) comprises an installation seat (321) and a camera (322) disposed on the installation seat (321), wherein the installation seat (321) is rotatably connected to the support arm (31), and the camera (322) is configured to shoot a video.

3. The full-automatic litter box of claim 2, wherein a first connection tab (313) and a second connection tab (314) are spaced apart and disposed on the support arm (31), a rotation space is defined between the first connection tab (313) and the second connection tab (314), and the installation seat (321) is located within the rotation space and rotatably connected to the first connection tab (313) and the second connection tab (314).

4. The full-automatic litter box of claim 3, wherein the installation seat (321) has an accommodation cavity, and the camera assembly (32) further comprises a drive member (323), a first gear (324), and a second gear (325) that are located within the accommodation cavity, wherein the drive member (323) is secured within the accommodation cavity, the first gear (324) is securely connected to an output end of the drive member (323), and the first gear (324) is drivingly engaged with the second gear (325); the first connection tab (313) or the second connection tab (314) is convexly provided with a securing shaft (3131), wherein the securing shaft (3131) is disposed within the accommodation cavity and securely connected to the second gear (325).

5. The full-automatic litter box of claim 3, wherein the installation seat (321) is convexly provided with a first rotation ring (3211) and a second rotation ring (3212), the first connection tab (313) is formed with a first rotation groove (3132), and the second connection tab (314) is provided with a second rotation groove (3141), wherein the first rotation ring (3211) is snapped within the first rotation groove (3132) and rotatably fitted with the first rotation groove (3132), and the second rotation ring (3212) is snapped within the second rotation groove (3141) and rotatably fitted with the second rotation groove (3141).

6. The full-automatic litter box of claim 5, wherein the second connection tab (314) is provided with a first stop platform (3142) and a second stop platform (3143) that are spaced apart and disposed within the second rotation groove (3141) in a circumferential direction of the second connection tab (314), and a rotation limiting protrusion (3213) is disposed within the second rotation ring (3212), wherein the rotation limiting protrusion (3213) is configured to abut against or be separated from the first stop platform (3142) or the second stop platform (3143).

7. The full-automatic litter box of claim 3, wherein the support arm (31) comprises a first support portion (311) and a second support portion (312) that are connected and disposed at an included angle from each other, wherein the first support portion (311) is detachably connected to the housing base (1), the second support portion (312) is bent and extends relative to the first support portion (311) toward an axial direction of the toilet compartment (2), and the first connection tab (313) and the second connection tab (314) are spaced apart and disposed at one end of the second support portion (312) facing away from the first support portion (311).

8. The full-automatic litter box of claim 2, wherein the camera assembly (32) further comprises a lighting component (326) disposed on the installation seat (321), wherein the lighting component (326) is configured to provide fill light for the camera (322); the support arm (31) is provided with an indicator lamp (316) and a microphone (317), wherein the indicator lamp (316) is configured to indicate a working state of the camera (322), and the microphone (317) is configured to collect audio.

9. The full-automatic litter box of any one of claims 1 to 8, wherein the toilet compartment (2) is rotatably disposed on the housing base (1), one side of the support arm (31) facing the toilet compartment (2) is provided with a rotatable rolling element (315), and the support arm (31) is in rolling fit with an outer wall of the toilet compartment (2) through the rolling element (315).

10. The full-automatic litter box of any one of claims 1 to 8, wherein the support arm (31) is provided with a display component (318) and a control button (319), wherein the display component (318) is configured to display a function menu of the full-automatic litter box, and the control button (319) is configured to adjust and execute any function in the function menu.
